# FASCICULE DE BREVET EUROPEEN

(11) **EP 1 351 440 B1**
(45) Date de publication et mention de la délivrance du brevet: **19.07.2006**
(21) Numéro de dépôt: 03290722.2
(22) Date de dépôt: 21.03.2003
(51) Int. Cl.: H04L 12/18, H04L 29/06

(54) **Dispositif pour la multidiffusion sécurisée**
Vorrichtung zur sicheren Mehrfachsendung
Device for secure multicasting

(30) Priorité: 02.04.2002 FR 0204088
(43) Date de publication de la demande: 08.10.2003
(73) Titulaire: ALCATEL, 75008 Paris (FR)
(72) Inventeur: Josset, Sébastien, 31100 Toulouse (FR); Duquerroy, Laurence, 31400 Toulouse (FR)
(74) Mandataire: Hedarchet, Stéphane

(56) Documents cités:
- WO-A-02/11356
- WO-A-99/09707
- US-B1- 6 195 751
- JORDAN F ET AL: "SECURE MULTICAST COMMUNICATIONS USING A KEY DISTRIBUTION CENTER" INFORMATION NETWORKS AND DATA COMMUNICATION. PROCEEDINGS OF THE IFIP TC6 INTERNATIONAL CONFERENCE ON INFORMATION NETWORKS AND DATA COMMUNICATION, FUNCHAL, MADEIRA ISLAND, PORTUGAL, APR. 18 - 21, 1994, PROCEEDINGS OF THE IFIP TC6 INTERNATIONAL CONFERE, vol. CONF. 5, 18 avril 1994 (1994-04-18), pages 367-380, XP000593303 ISBN: 0-444-81869-3
- ANDREW S TANENBAUM: "Computer Networks" 1996 , COMPUTER NETWORKS, ENGLEWOOD CLIFFS, PRENTICE HALL, US, PAGE(S) 212-239 XP002079137 * page 223, ligne 17 - page 225, ligne 26 *

## Description

L'invention est relative à un système de télécommunications, notamment de type IP ("Internet Protocol"), et à des équipements pour un tel système.

Elle concerne plus particulièrement un système de télécommunication dans lequel certains terminaux forment des groupes et dans chaque groupe un terminal est susceptible d'émettre, vers tous les autres terminaux, des messages, tels que des paquets IP, qui ne doivent pas être compréhensibles par les terminaux des autres groupes.

Pour résoudre ce type de problème de façon sûre on fait en général appel à un chiffrement des messages. A cet effet des algorithmes et des clés sont négociés entre les terminaux deux à deux. Autrement dit un message sécurisé ne peut être adressé qu'à un seul destinataire et non simultanément à une pluralité de destinataires. Dans ces conditions si un groupe comporte n terminaux, chaque message doit être envoyé n-1 fois.

Cette multiplication des messages sécurisés à envoyer entraîne une augmentation du trafic qui peut conduire à une saturation du réseau. En outre, les sessions d'établissements de liens sécurisés deux à deux entre terminaux peuvent aussi contribuer à l'augmentation du trafic.

L'invention remédie à ces inconvénients.

Le système selon l'invention est caractérisé en ce qu'il comprend un serveur central destiné à fournir à tous les terminaux d'un groupe des clés de chiffrement et de déchiffrement pour permettre que chaque terminal du groupe puisse émettre vers les autres terminaux du groupe un seul message chiffré et que les terminaux destinataires puissent déchiffrer le message ainsi émis.

Ainsi, avec l'invention, l'envoi de messages multidestination de type sécurisé n'entraîne pas la nécessité de transmettre autant de messages cryptés que de destinataires et le trafic est donc limité au minimum.

L'invention est particulièrement utile pour les transmissions sans fil à l'aide d'antennes terrestres ou à l'aide d'équipements à bord d'un ou plusieurs satellites. En effet, ce type de diffusion d'informations présente l'avantage de permettre de servir une multiplicité de terminaux, en particulier des terminaux éloignés les uns des autres dans le cas d'une diffusion par satellite.

Mais de tels moyens de transmission de données sont plus difficiles à protéger contre les indiscrétions que les réseaux filaires terrestres car, dans un réseau filaire, pour pouvoir intercepter des informations il faut accéder au câblage alors qu'avec une transmission sans fil, tout terminal se trouvant dans le champ de l'antenne correspondante est capable d'intercepter les informations transmises. De même un terminal émetteur non autorisé peut s'insérer dans le réseau.

Il est donc préférable de transporter les informations, tels que les paquets IP, en mode sécurisé comme c'est le cas avec l'invention.

Bien que l'invention ne soit pas limitée à ces applications, dans ce qui suit on décrira surtout l'invention pour les réseaux faisant intervenir une transmission de paquets IP par l'intermédiaire d'équipements à bord de satellites. Il existe divers protocoles permettant de sécuriser le transport des paquets IP. Cette sécurité s'effectue soit au niveau physique (par exemple par agilité en fréquence), soit au niveau accès (par exemple par brouillage), soit au niveau IP (en utilisant le protocole IPsec), soit au niveau transport (en faisant appel au protocole TLS "Transport Layer Security"), soit, enfin, au niveau de l'application (protocole SSL "Secure Socket Layer"). Mais aucun de ces protocoles de sécurité n'est adapté à l'obtention d'une sécurité élevée pour la transmission de type multidestination, c'est-à-dire pour la transmission simultanée de paquets IP à une multiplicité de destinataires.

Ainsi, le brouillage par le protocole DVB-RCS n'offre pas une sécurité d'un degré élevé ; les protocoles IPsec au niveau IP et les protocoles TLS au niveau transport ainsi que SSL au niveau application ne sont adaptés qu'à une sécurité point à point, c'est-à-dire entre deux destinataires mais non dans un groupe, c'est-à-dire vers une multiplicité de destinataires.

Dans cette application, les terminaux sont en communication les uns avec les autres par transmission sans fil, notamment par satellite, et à chaque terminal d'émission/réception est associé un organe de chiffrement et de déchiffrement destiné à chiffrer les informations émises par voie hertzienne et à déchiffrer les informations reçues par cette voie.

Dans une réalisation préférée (qui s'applique quel que soit le type de réseau) le serveur, outre sa fonction de distribution des clés de chiffrement et déchiffrement permet d'authentifier les organes de chiffrement et de déchiffrement associés à chaque terminal.

Dans une réalisation, les paquets IP émis par un terminal sont transmis en mode tunnel, c'est-à-dire que chaque paquet IP chiffré est encapsulé dans un autre paquet de façon à non seulement protéger les données elles-mêmes, mais aussi les en-têtes, dont par exemple les adresses source et destinataires.

L'organe de chiffrement et déchiffrement associé à chaque terminal constitue, dans une réalisation, un boîtier distinct de celui du terminal. En variante, cet organe est réalisé par logiciel au sein de la pile IP du terminal.

Dans un mode de réalisation, chaque organe associé à un terminal du réseau comporte un premier sélecteur pour déterminer si les données à émettre doivent être chiffrées ou non, et un second sélecteur pour déterminer si les données reçues doivent subir un déchiffrement ou non.

La commande des sélecteurs ainsi que du chiffrement et du déchiffrement est de préférence effectuée dans un plan de contrôle séparé du plan des données.
En variante, à la place de paquets IP, on fait appel à d'autres formats ou normes tels que ATM, Ethernet, MPLS ("Multiprotocol Label Switching" de la norme IETF), PPP ("Point to Point Protocol") ou PPPoE ("Point to Point Protocol Over Ethernet").

Le document US-6 195 751-B décrit un système pour le renouvellement de clés utilisées pour la protection de messages dans un groupe de multidiffusion. Les clés sont distribuées d'un serveur aux membres du groupe lorsqu'un des membres joint le groupe et/ou quitte le groupe.

L'invention concerne de façon générale un dispositif selon la revendication 1 et un serveur selon la revendication 6. Les revendications dépendantes se rapportent à des réalisations préférées.

D'autres caractéristiques et avantages de l'invention apparaîtront avec la description de certains de ses modes de réalisation, celle-ci étant effectuée en se référant aux dessins ci-annexés sur lesquels:
la figure 1 est un schéma d'un système de télécommunication conforme à l'invention,
la figure 2 est un schéma d'un dispositif de chiffrement et déchiffrement conforme à l'invention,
la figure 3 montre une application du dispositif montré sur la figure 2,
la figure 4 représente une variante de l'utilisation du dispositif montré sur la figure 2,
la figure 5 est un schéma montrant un paquet chiffré par le dispositif de la figure 2,
la figure 6 représente un exemple d'échanges de messages de sécurité,
la figure 7 est un schéma analogue à celui de la figure 6 pour une autre phase d'échanges de messages, et
la figure 8 est aussi un schéma analogue à celui de la figure 6, mais pour encore une autre phase d'échanges de messages.

L'exemple de réalisation de l'invention que l'on va maintenant décrire en relation avec les figures concerne un réseau de télécommunication par satellite, relié à un réseau terrestre. Ces réseaux sont destinés à transporter des paquets selon le protocole IP.

Le réseau de télécommunication par satellite comporte un ensemble de terminaux terrestres 12, 14, 16, 18 etc. destinés à émettre, et recevoir, selon le protocole IP. Les paquets émis et reçus transitent par des équipements de réémission et de réception à bord d'un satellite 20. Le satellite 20 est d'un type quelconque, géostationnaire ou défilant.

Les paquets émis par chaque terminal 12 sont de type mono ou rnultidestination. Par monodestination on entend qu'un terminal envoie un message vers un seul autre terminal. Par "multidestination", on entend qu'un terminal envoie ses messages vers une pluralité d'autres terminaux. Certaines communications multidestinations ne sont pas destinées à l'ensemble des terminaux se trouvant dans le champ du satellite mais seulement à des terminaux faisant partie d'un même groupe. Les données destinées à des terminaux sélectionnés sont donc chiffrées.

A cet effet, on affecte à chaque terminal 12, 14, etc. un organe de chiffrement et de déchiffrement 12₁, 14₁ etc. qui, comme représenté, peut être sous forme d'un boîtier séparé du terminal 12.

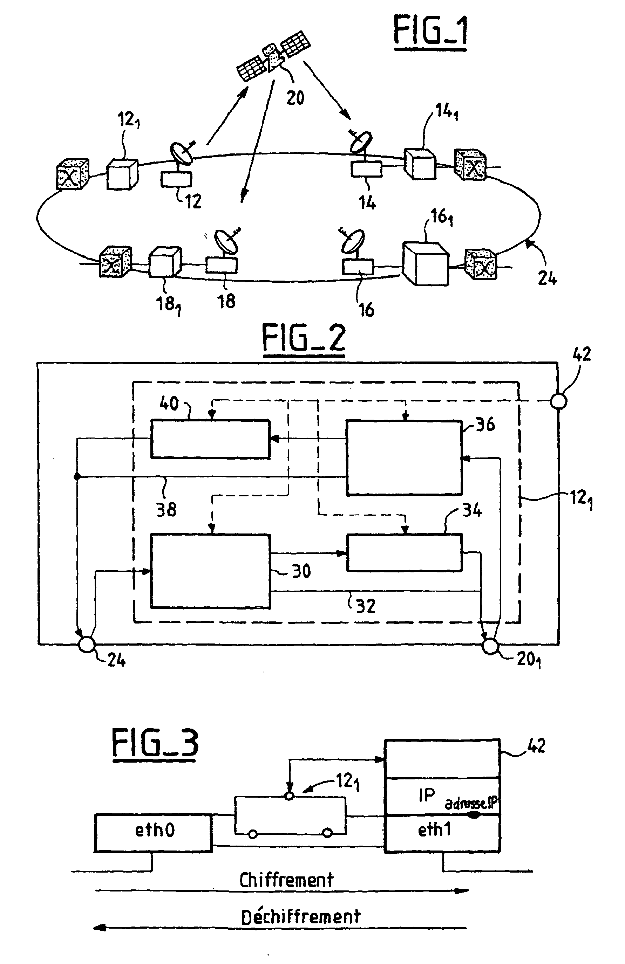

En variante (non montrée sur la figure 1) les organes de chiffrement et de déchiffrement sont intégrés dans les logiciels des terminaux satellites. Ces mécanismes de chiffrement et déchiffrement ainsi que les autres fonctions des organes 12₁, 14₁ etc. peuvent être, dans ce cas, intégrés dans la pile IP des terminaux 12, 14.

Dans ce qui suit, on décrira principalement le cas représenté, c'est-à-dire le cas où l'on prévoit des boîtiers 12₁, 14₁ etc. de chiffrement et de déchiffrement qui sont séparés des terminaux 12, 14, etc.

Les boîtiers 12₁, 14₁ sont gérés par un boîtier maître 16₁, ou serveur, dont le rôle est d'authentifier les boîtiers 12₁, 14₁, 16₁, 18₁ etc., appelés boîtiers clients, et de leur distribuer toutes les informations dont ils ont besoin qui se rapportent au niveau de sécurité retenu pour la transmission des données du groupe formé par les terminaux et boîtiers associés, c'est-à-dire toutes les informations permettant que les données fournies par un membre du groupe soient compréhensibles seulement par les autres membres de ce groupe.

L'ensemble des paramètres à fournir à chaque boîtier est appelé une "association de sécurité" et ces paramètres sont distribués à chaque nouveau boîtier après vérification de son identité.

Les paquets IP émis par un des membres du groupe sont chiffrés, par le boîtier 12₁, 14₁, ... à leur entrée dans le réseau de communication par satellite 20. Ces paquets peuvent être reçus par l'ensemble des terminaux dans le champ du satellite mais ne pourront être déchiffrés que par les différents autres membres du groupe, grâce à leurs boîtiers correspondants.

La transmission dans le réseau satellite peut s'effectuer en mode tunnel, c'est-à-dire qu'un paquet IP, qui comprend des données et un en-tête, est chiffré dans son entier et ce paquet chiffré forme la partie de données d'un nouveau paquet auquel on ajoute un autre en-tête. Le type de traitement exact qui est effectué sur le paquet est décrit dans l'association de sécurité. Il est non seulement possible de chiffrer le paquet en entier mais aussi de modifier des champs IP.

On comprend que l'invention permet d'utiliser une architecture de réseau de transmission par satellite sans le modifier.

La figure 2 représente sous forme de bloc fonctionnel la structure d'un boîtier, tel que le boîtier 12₁.

Ce boîtier comporte un premier sélecteur 30 recevant des données du réseau terrestre 24 et qui fournit au réseau 20₁ satellite 20 soit directement les données (liaison 32), dans le cas où aucun chiffrement n'est prévu, soit des données chiffrées par l'intermédiaire d'un organe 34 de chiffrement.

Le boîtier 12₁ comporte un second sélecteur 36 recevant des données du réseau 20₁ et fournissant des données au réseau terrestre 24 soit directement par la liaison 38, soit par l'intermédiaire d'un organe 40 de déchiffrement.

Chacun des sélecteurs 30 et 36 ainsi que l'organe de chiffrement 34 et l'organe de déchiffrement 40 reçoit des données de commandes d'un plan de commande ou contrôle 42.

La figure 3 illustre une réalisation dans laquelle les protocoles utilisés par les boîtiers 12₁, 14₁ ... sont du type Ethernet (eth0, ethl), la transmission s'effectuant au niveau de la couche physique des données, c'est-à-dire au niveau d'une trame Ethernet sans remonter à la couche IP.

Ainsi toutes les trames Ethernet sont capturées par les boîtiers clients et les paquets en sont extraits, éventuellement chiffrés comme expliqué ci-dessus, puis réintroduits dans la trame avant d'être transmis vers le réseau satellite 20₁.

Les trames provenant du réseau 20₁ subissent le traitement inverse après vérification de leur intégrité.

Chacun des boîtiers clients, est muni d'une adresse IP qui lui est spécifique. Cette adresse IP permet de communiquer avec le boîtier maître et de s'authentifier auprès de ce boîtier pour recevoir les paramètres de l'association de sécurité. L'adresse IP est également utile pour le renouvellement des clés.

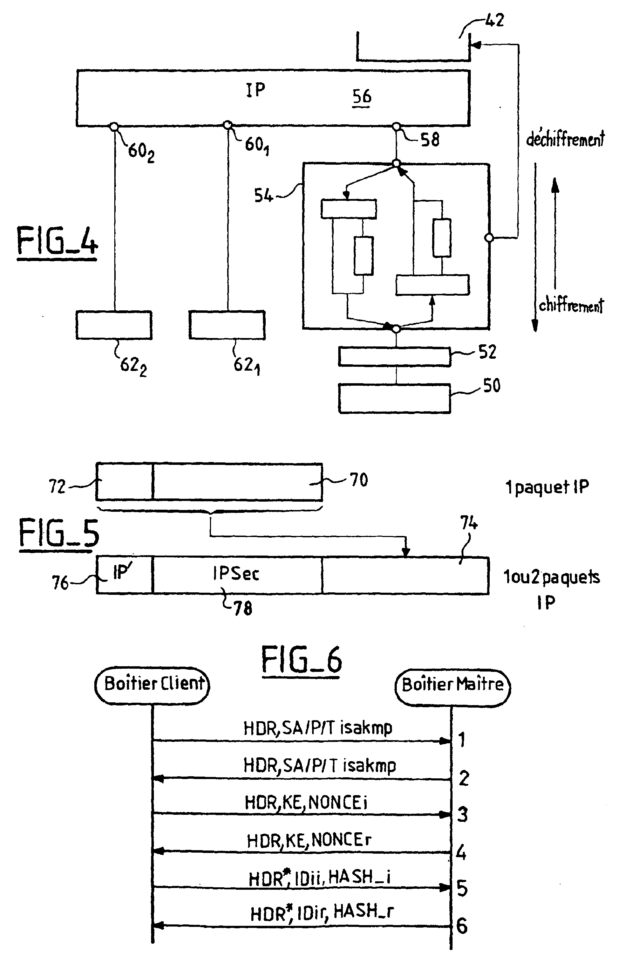

La figure 4 illustre l'organe de chiffrement et de déchiffrement dans le cas où il constitue un logiciel du terminal satellite.

Les données provenant du réseau satellite sont fournies à un module d'interface 50 qui transmet ces données à un module 52 de désencapsulage des paquets IP. Les paquets IP désencapsulés sont fournis à un bloc 54 contenant des modules sélecteurs et de déchiffrement ayant la même fonction que les organes décrits en relation avec la figure 2. Les données du bloc 54 sont fournies à la couche IP 56 par l'intermédiaire d'une interface 58 avec la couche IP.

Les données de la couche IP sont transmises sur le réseau terrestre et routées à l'aide d' interfaces 60₁, 60₂ et transmises vers des interfaces respectifs 62₁, 62₂.

Bien entendu, les interfaces fonctionnent dans les deux sens.

Quel que soit le mode de réalisation des boîtiers clients et maître leur fonction la plus importante est d'assurer des services de sécurité.

Ainsi, les boîtiers clients ainsi que le boîtier maître permettent tout d'abord de protéger et sécuriser les communications IP. La confidentialité du trafic est assurée grâce au chiffrement des données et des en-têtes des paquets IP et par la transmission en mode tunnel dans le réseau 20₁ à satellite.

Chacun des boîtiers clients comporte des moyens pour vérifier l'intégrité des données, c'est-à-dire pour vérifier si chaque paquet IP reçu a subi des modifications, accidentelles ou intentionnelles.

Chaque boîtier client peut permettre aussi d'authentifier l'origine des données, c'est-à-dire de vérifier que chaque paquet IP provient d'un des membres du groupe.

Les boîtiers peuvent permettre enfin d'empêcher les attaques par rejeu. A cet effet on assigne à chaque paquet un nombre entier unique constituant un numéro d'ordre. Dans ces conditions, si un paquet est renvoyé par un tiers étranger au groupe, ce paquet "rejoué" aura un numéro qui ne correspondra pas à la succession des autres paquets.

Le boîtier maître 16₁ comporte des moyens d'authentification des boîtiers.

De façon générale ce boîtier maître assure une gestion centralisée des clés à utiliser par chaque boîtier client pour sécuriser le trafic IP. Ainsi le boîtier maître génère les clés, les distribue et les renouvelle.

Le boîtier maître et les boîtiers clients peuvent être organisés de façon telle que, dans un même groupe, on puisse définir plusieurs niveaux de sécurité. Par exemple si un groupe d'utilisateurs est constitué de tous les membres d'une entreprise, on pourra distinguer entre les membres du siège et les membres de chaque filiale, caractérisés par leurs adresses réseau.

On notera que les services de protection des données, à savoir le service de confidentialité du trafic, le service d'authentification de l'origine des données, et le service de vérification de l'intégrité des données peuvent être utilisés séparément ou en combinaison.

Ainsi il est possible d'assurer la confidentialité du trafic sans vérification de l'authenticité de l'origine des données ou de l'intégrité de ces données. Pour une sécurité plus importante on assurera à la fois la confidentialité du trafic et l'authentification des données et/ou la vérification de leur intégrité. Il est également possible de vérifier l'authenticité de leur origine des données et/ou leur intégrité, sans assurer la confidentialité du trafic.

Pour le contrôle des données, on définit un plan de contrôle qui comporte des moyens dans chaque boîtier maître et dans chaque boîtier client.

Le boîtier maître constitue un serveur central pour la gestion des boîtiers clients. Ce boîtier maître comporte une base de données des boîtiers clients autorisés à accéder aux données qui doivent être échangées à l'intérieur du groupe.

Dans cette base de données chaque boîtier client est répertorié par un identifiant logique unique et par une donnée secrète connue uniquement du boîtier maître et du boîtier client concerné et servant à l'authentification. Dans la base de données on prévoit aussi, pour chaque boîtier client, une liste d'identifiants d'associations de sécurité auxquelles ce boîtier client est autorisé à accéder.

Les paramètres principaux de la base de données des associations de sécurité sont:
- des paramètres de filtrage, définissant le groupe destinataire;
- les paramètres des fonctions réalisées par l'association de sécurité, à savoir:
   - Le type de l'association de sécurité qui définit le format d'encapsulation des paquets IP,
   - la transmission en mode tunnel pur ou en mode tunnel transport avec l'adresse IP du (ou des) destinataire(s) (selon qu'il s'agisse d'une transmission mono ou multidestinations),
   - une fonction d'authentification qui comprend les possibilités suivantes: aucune authentification, une fonction HMAC-SHA1, HMAC-RD5 etc.; les paramètres de cette fonction d'authentification sont d'une part, la clé à utiliser, et, d'autre part, la longueur de cette clé et sa durée de vie,
   - la fonction de chiffrement qui peut comprendre les possibilités suivantes: aucun chiffrement, 3DESECB, 3DESCBC, etc.; le chiffrement comporte aussi comme paramètres la clé à utiliser, sa longueur et sa durée de vie.
- la durée de validité de l'association de sécurité ; cette durée de validité est, bien entendu, liée à la durée de vie des clés utilisées.

Pour le plan de contrôle, chaque boîtier client comporte, dans l'exemple, une carte à mémoire, par exemple à microprocesseur, dont la mémoire contient l'identifiant logique du boîtier ainsi que la clé (secrète) partagée uniquement avec le boîtier maître. Dans la mémoire de la carte, on prévoit aussi une adresse IP et un paramètre définissant ce boîtier comme constituant un élément du réseau.

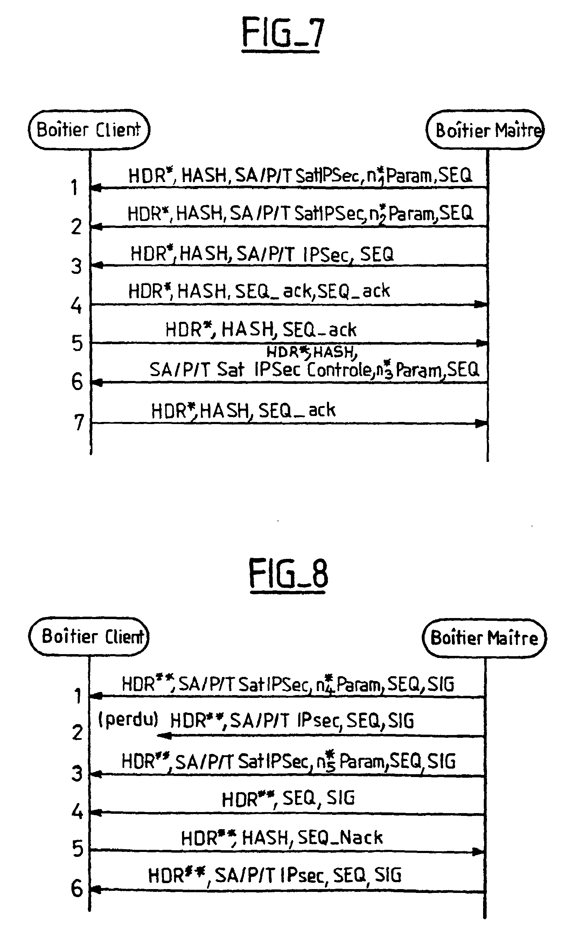

Avant qu'un boîtier client soit autorisé à recevoir et émettre des paquets IP de façon sécurisée, une connexion est établie entre ce boîtier client et le boîtier maître afin de démarrer une session préalable d'autorisation appelée phase 1 (figure 6), suivie de l'envoi par le boîtier maître des informations de configuration en mode monodestination (phase 2 - figure 7) et/ou en mode multidestinations (phase 2 bis - figure 8). Ces informations sont échangées par l'intermédiaire du réseau à satellite.

Lors de la phase 1 (figure 6) une authentification mutuelle est effectuée entre le boîtier client et le boîtier maître (par exemple, à l'aide d'une clé partagée). Le boîtier maître peut alors vérifier l'identité du boîtier client et déterminer s'il est autorisé à accéder aux associations de sécurité du groupe auquel il appartient. Le boîtier client, de son côté, vérifie qu'il a bien affaire au boîtier maître.

Lors de la phase 1 (figure 6), une clé commune secrète est engendrée, par exemple à l'aide du schéma Diffie-Hellman, et cette clé est utilisée ensuite pour transmettre de façon sécurisée les tables ou paramètres de l'association de sécurité du groupe.

Pour la phase 1, on peut utiliser la première phase du protocole IKE (Internet Key Exchange : Norme IETF), soit en mode principal (comme montré sur la figure 6), soit en mode agressif.
- Le mode principal permet de réaliser une authentification mutuelle par clés partagées et de générer une clé commune secrète.
- Le mode agressif permet également de réaliser une authentification mutuelle par clés partagées et de générer une clé commune secrète. Lorsqu'on fait appel à ce mode, la phase 1 s'effectue de façon plus rapide que dans le cas du mode principal. Ce mode agressif ne protège pas l'identité des boîtiers maître et client.

On établit ainsi un tunnel sécurisé entre chaque boîtier client et le boîtier maître. Ce n'est qu'à la suite de ces échanges que l'ensemble des paramètres des associations de sécurité à utiliser pour sécuriser les paquets IP à destination du groupe d'utilisateurs (clés incluses) peut être envoyé secrètement au boîtier client par le boîtier maître.

Cette transmission des paramètres peut non seulement être effectuée par des messages monodestination (phase 2 - figure 7), mais elle peut être également réalisée par des messages multidestinations (phase 2 bis - figure 8). Dans ce dernier cas, le boîtier maître s'adresse à plusieurs boîtiers clients appartenant à un même groupe. Cette phase est protégée par l'association de sécurité de contrôle. Elle peut servir à la configuration des boîtiers clients ou à la mise à jour de leurs associations de sécurité. Cette phase peut être utilisée lorsque de nombreux boîtiers clients d'un même groupe établissent en même temps une connexion avec le boîtier maître. Dans ce cas, le boîtier maître peut envoyer en monodestination seulement l'association de sécurité de contrôle pour chaque boîtier client, et ensuite s peut transmettre simultanément à l'ensemble des boîtiers clients les tables des associations de sécurité auxquelles ils ont le droit d'accéder.

Cette transmission multidestinations optimise la bande passante. Elle peut également intervenir après la transmission monodestination pour mettre à niveau les associations de sécurité des boîtiers clients afin que ceux-ci soient mis à jour en même temps.

A la suite de la phase 1, en mode principal ou agressif, les clés de session -utilisées pour le chiffrement et le déchiffrement, l'authentification et la vérification de l'intégrité des paquets IP par les boîtiers clients- sont donc distribuées par le boîtier maître et renouvelées ensuite de façon régulière. Pour cette distribution et ce renouvellement de clés, on utilise soit un mode nominal soit un mode dégradé.
- Pour le renouvellement des clés en mode nominal, on fait appel à l'association de sécurité de contrôle, qui est commune à tous les boîtiers clients et reçue lors de la phase 2 (figure 7) Cette association de sécurité de contrôle sert à protéger les clés de session. Lors du renouvellement des clés de session, le boîtier maître peut envoyer simultanément à tous les boîtiers clients autorisés les nouvelles clés chiffrées avec la clé de chiffrement de l'association de sécurité de contrôle.

Ce mode nominal convient particulièrement bien lorsque le nombre de boîtiers est élevé puisque les clés sont envoyées simultanément à tous les boîtiers.
- En mode dégradé, les clés de session sont envoyées à chaque boîtier client. Pour chaque boîtier client, elles sont protégées par le tunnel sécurisé établi en phase 1 avec le boîtier maître (figure 6). Ce mode dégradé fait donc appel à une transmission une par une. Il se distingue du mode nominal par le fait qu'on ne fait pas appel à l'association de sécurité de contrôle.

Le plan des données comprend le format des paquets IP, les en-têtes des divers types de paquets et les fonctions et algorithmes utilisés.

La figure 5 représente un paquet IP classique qui comporte, d'une part, une partie de données 70 et, d'autre part un en-tête IP 72.

Comme indiqué ci-dessus, pour assurer une transmission sécurisée des paquets dans le réseau 20₁ on fait appel au mode tunnel dans lequel un nouveau paquet IP est créé à partir du paquet initial, le paquet initial étant sécurisé, c'est-à-dire que son en-tête et ses données sont chiffrées.

Comme montré sur la figure 5, le paquet 70, 72 est chiffré pour former le paquet 74 auquel on ajoute, d'une part, un en-tête IP'76 pour l'adressage et le routage, et d'autre part, un en-tête SatIPsec 78 pour la sécurisation des données à transmettre, et nécessaire pour leur déchiffrement.

La transmission peut s'effectuer en mode tunnel pur, dans lequel l'adresse IP source du nouveau paquet IP formé est l'adresse IP du boîtier émetteur, et l'adresse IP destinataire est celle du (des) boîtier(s) destinataire(s). Autrement dit, les adresses IP de la source d'origine et du destinataire final peuvent être cachées dans ce cas.

On peut également faire appel au mode tunnel transport dans lequel les adresses de la source et du destinataire du paquet IP formé pour le transport sont celles du paquet initial.

L'en-tête SatIPsec 78 dédié aux mécanismes et fonctions de sécurité appliqués au paquet IP initial peut comporter un ou plusieurs des champs suivants:
- Un identifiant de l'association de sécurité appliquée au paquet. Ce champ permet à chaque boîtier d'identifier pour un paquet IP reçu les fonctions et les clés à utiliser pour lui rendre sa forme initiale.
- Un champ d'authentification qui fournit une valeur résultant de l'application d'une fonction de hachage sur le paquet 74,76,78.
- Un paramètre indiquant, d'une part, la longueur du paquet et, d'autre part, si ce dernier a été segmenté avant d'être transmis en mode tunnel. Dans ce cas, le paramètre indique si on a affaire au premier ou au dernier segment, ou à un segment intermédiaire. Ce champ permet au boîtier récepteur d'effectuer l'assemblage du paquet initial.
- La durée de vie de l'association de sécurité avec la date de début et la date de fin. Ce champ indique si une nouvelle clé de session est utilisée ou si la clé actuelle arrive en fin de vie.
- Un compteur qui est incrémenté à chaque paquet IP envoyé. Le nombre ainsi affecté à chaque paquet permet d'éviter les attaques par rejeu. Dans le cas où plusieurs sources sont prévues pour émettre des paquets IP, chacune de ces sources dispose de son propre compteur et les récepteurs doivent alors identifier la source du paquet IP avec l'adresse IP source.

Les fonctions et algorithmes utilisés sont, par exemple, ceux du protocole de la norme IPSec, c'est-à-dire, pour le chiffrement des données, le protocole 3DES en mode CBC, et pour la vérification de l'intégrité, de l'authenticité et de l'origine d'un paquet, des fonctions de hachage telles que HMAC-MD5 ou HMAC-SHA.

L'algorithme de chiffrement est appliqué sur le paquet IP initial, c'est-à-dire sur les en-têtes et les données.

Pour l'authentification, les fonctions de hachage sont appliquées sur l'ensemble du paquet, c'est-à-dire sur l'en-tête IP', sur l'en-tête SatIPsec et sur les données sécurisées. Il est ainsi possible de détecter toute modification sur les paramètres mentionnés en clair qui sont indispensables au récepteur pour déchiffrer les paquets et réaliser les différentes vérifications ainsi que pour réassembler le paquet initial.

De façon générale, l'encapsulation des paquets IP dépend des associations de sécurité définies pour le trafic de ces paquets . On peut ainsi utiliser l'encapsulation définie ci-dessus, les encapsulations normalisées IPSec AH/ESP ou une encapsulation IP dans IP. On peut aussi faire appel à une modification du paquet IP que l'on peut envoyer sans encapsulation.

Quel que soit son mode de réalisation, l'invention assure de façon simple une sécurisation des données multidestinations ou monodestinations transmises notamment sous le protocole IP par système hertzien et plus particulièrement par satellite. Elle est adaptée aux réseaux dits VPN ("Virtual Private Network").

Le coût d'installation et de réalisation des divers équipements est modéré.

Dans un mode de réalisation les diverses phases de l'établissement d'une session sont fiabilisées de façon à s'assurer que l'ensemble des configurations envoyées par le boîtier maître soit implanté dans les boîtiers destinataires et afin de s'assurer que le renouvellement des clés et les mises à jour soient réalisées dans l'ensemble des boîtiers clients prévus.

Pour la phase 1 (figure 6),au cours de laquelle les messages sont échangés selon un ordre prédéterminé, la fiabilité est assurée en imposant les contraintes suivantes : un seul message est envoyé à la fois ; l'ordre des messages est inanuable et à chaque envoi est associé une durée de temporisation : si le message suivant n'est pas reçu avant l'expiration de cette durée, le message est transmis de nouveau.

La figure 6 est un schéma représentant un exemple d'échange de messages pour cette phase 1 entre un boîtier maître et un boîtier client. Sur cette figure, on a représenté six messages qui sont destinés à effectuer une authentification mutuelle du boîtier maître et du boîtier client et une mise en place d'un tunnel chiffré. Ces messages sont effectués, dans cet exemple, en faisant appel au protocole IKE et, de façon plus précise, au protocole ISAKMP contenu dans la norme RFC 2408. Les lignes 1 à 6 de la figure 6 utilisent le formalisme de ce protocole ISAKMP. Ainsi :
HDR est un en-tête générique suivi de données.
SA est une association de sécurité.
P est une proposition.
T est une transformation.
KE est un échange de clés.
NONCE est une valeur aléatoire.
HASH est une valeur de hachage.
IDi est une identification.
SEQ est un numéro de séquence.
SIG est une signature numérique.
HDR* signifie que l'ensemble des données du message est chiffré.

Au cours de la seconde phase, ou phase 2, représentée sur la figure 7, le serveur envoie à chaque boîtier client des messages de configuration en mode monodestination. Le nombre des messages de configuration varie suivant les sessions. Pour garantir la fiabilité de cette seconde phase, on prévoit une procédure d'acquittement basée sur un numéro de séquence présent dans un des champs du message, les messages non acquittés étant retransmis.

Dans cet exemple, les acquittements sont sélectifs : le récepteur précise les numéros de séquences de messages déjà reçus. Ainsi le boîtier client envoie périodiquement un message d'acquittement mentionnant jusqu'à quel numéro de séquence il a reçu l'ensemble des messages. Par exemple, si le boîtier client a reçu correctement les numéros de séquences de 1 à 9 et de 11 à 15, il enverra un accusé de réception mentionnant cette situation et le boîtier maître comprendra qu'il faut renvoyer le message correspondant au numéro de séquence 10 qui manque. Dans ces conditions, comme l'acquittement intervient alors que d'autres messages sont déjà parvenus au boîtier client, cet acquittement sélectif permet de limiter les renvois de messages à ceux qui n'ont pas été reçus. Comme pour la première phase tout message qui n'est pas acquitté lorsque sa durée de temporisation arrive à expiration est retransmis.

Cette phase 2 constitue une phase de mise à niveau des boîtiers clients par rapport aux boîtiers déjà connectés et fournit des instructions pour le chiffrement des paquets. Dans l'exemple représenté sur la figure 7, on fait également appel au protocole ISAKMP avec le même formalisme.

Cependant, on a indiqué dans les lignes 1, 2 et 6 une indication SA/P/T SatIPSec qui correspond à l'envoi de données spécifiques à l'invention. Ainsi, aux lignes 1 et 2, la partie des données contient n₁ Param et n₂Param qui signifient "n₁ paramètres" et "n₂ paramètres" et ces paramètres correspondent à ceux de blocs fonctionnels prévus dans chaque association de sécurité comme décrit plus loin.

À la ligne 6, on prévoit des paramètres de contrôle.

Le suffixe ack, par exemple SEQ_ack, signifie un accusé de réception de SEQ (numéro de séquence).

Au cours de la phase 2 bis (figure 8), le boîtier maître envoie des messages de configuration de type multidestinations à plusieurs boîtiers clients. Pour fiabiliser cette phase on prévoit un acquittement négatif avec retransmission, c'est-à-dire qu'un boîtier client n'ayant pas reçu un message demandera sa retransmission en envoyant un message de non acquittement. Dans ce cas aussi chaque message comporte un numéro de séquence. Chaque boîtier client connaît le premier numéro de séquence que le boîtier maître utilisera et, de façon régulière, le boîtier maître envoie un message mentionnant le dernier numéro de séquence utilisé. Lorsqu'un boîtier client détermine qu'il n'a pas reçu un ou plusieurs messages il déclenche une temporisation. A l'expiration de cette durée de temporisation le boîtier client envoie un message de non acquittement mentionnant les numéros de séquence manquants, ce qui déclenche la retransmission, en mode multidestinations, des messages correspondants.

Autrement dit, contrairement aux acquittements ou accusés de réception sélectifs, prévus au cours de la phase 2 de type mono-destination, au cours de cette phase 2bis de type multidestinations, les boîtiers clients n'envoient pas systématiquement d'accusé de réception. C'est seulement lorsqu'il manque un numéro de séquence que le boîtier client envoie un accusé de réception négatif. Dans ces conditions, le trafic des boîtiers clients vers le boîtier maître est limité.

La durée de temporisation peut être différente d'un boîtier client à un autre afin d'éviter la congestion du boîtier maître.

La figure 8 représente un exemple de messages envoyés par le boîtier maître en mode multidestinations et un message (ligne 5) envoyé par l'un des boîtiers clients vers le boîtier maître.

Sur cette figure, les indications portées à chaque ligne ont la même signification que sur les figures 6 et 7. Cependant, le suffixe Nack correspond à un accusé de réception de type négatif comme expliqué ci-dessus et HDR** signifie que le chiffrement de l'ensemble des données du message correspond à une autre clé et/ou à un algorithme de chiffrement différent de celle et/ou celui utilisé(e) pour la phase 1 ou la phase 2 (figure 6 et figure 7).

Selon un mode de réalisation on prévoit que le protocole de sécurisation offre des fonctions et des services supplémentaires par rapport au protocole normalisé IPSec.

En effet dans le protocole connu IPSec une association de sécurité est utilisée seulement pour définir les paramètres qui serviront à sécuriser des paquets IPSec. Ainsi le protocole IPSec constitue un bloc fonctionnel unique permettant de protéger des flux de données. Au cours de l'utilisation de ce bloc aucun paramètre ne peut être modifié, à l'exception des clés qui sont renouvelées régulièrement. Si l'utilisateur souhaite modifier une des caractéristique de l'association de sécurité celle-ci doit être renégociée.

Dans une réalisation du protocole selon l'invention des services supplémentaires sont définis dans chaque association de sécurité et constituent des blocs fonctionnels séparés, chaînés entre eux.

Ainsi alors que dans le protocole IPSec la compression, le chiffrement et l'authentification forment un seul bloc fonctionnel, il est possible, conformément à l'invention, de séparer la compression du chiffrement IPSec.

Les blocs fonctionnels que l'on peut prévoir dans chaque association de sécurité sont compris par exemple dans le groupe comportant : le protocole de chiffrement IPSec ESP (défini par la norme RFC 2406), le protocole d'authentification IPSec AH (défini par la norme RFC 2402), le chiffrement, l'authentification, le mode tunnel, un protocole TCP "spoofer" (modifications des paquets TCP qui évitent les limitations de débit dues au temps de transmission par satellite), un protocole IGMP proxy (modifications des paquets IGMP, "Internet Group Management Protocol", pour une optimisation du trafic sur le lien satellite) et un protocole Drop (filtre basé sur une description de paquets, ne laissant passer que les paquets ayant un gabarit autorisé).

Le chaînage des blocs fonctionnels permet une flexibilité du protocole. Ainsi au cours de l'utilisation d'une association de sécurité il est possible de modifier les paramètres de cette chaîne en supprimant un bloc, en ajoutant un bloc ou en remplaçant un bloc par un autre.

## Revendications

1. Dispositif de chiffrement (34) et de déchiffrement (40) comportant une première interface pour recevoir et émettre, à travers un premier réseau de
télécommunication par satellite (20), des messages chiffrés, une seconde interface connectée à un second réseau filaire (24) pour recevoir de ce second réseau des messages à chiffrer à transmettre par le premier réseau et pour délivrer sur ce second réseau des messages déchiffrés et provenant du premier réseau, et une troisième interface pour recevoir d'un serveur (16) des clés de chiffrement et déchiffrement, les clés de chiffrement permettant de chiffrer un message multidestinations vers des destinataires sélectionnés faisant partie d'un même groupe qu'un terminal auquel le dispositif est associé, ledit dispositif comportant des moyens pour émettre lesdits messages sous forme de paquets IP chiffrés en mode tunnel, un moyen pour émettre et recevoir des seconds en-têtes avec des données de sécurité comprises dans le groupe comportant : des données d'identification permettant au dispositif de déterminer les fonctions et clés à utiliser pour rendre sa forme initiale à chaque paquet et vérifier son intégrité et son origine, des données relatives à la segmentation des paquets, des données de durée de vie de clés de session, et un numéro de paquet.

2. Dispositif selon la revendication 1, **caractérisé en ce que** le plan de contrôle et le plan de données du dispositif sont séparés.

3. Dispositif selon la revendication 2 **caractérisé en ce qu'**il comporte un moyen pour transmettre les paquets IP chiffrés avec un premier en-tête de routage et d'adresse et un second en-tête concernant des données de sécurité de ce paquet.

4. Dispositif selon l'une des revendications 1 à 3 **caractérisé en ce que** son interface pour la connexion au premier réseau est connectée directement à une interface d'un terminal de ce réseau.

5. Dispositif selon l'une des revendications 1 à 4 **caractérisé en ce qu'**il est réalisé sous la forme d'un logiciel intégré à la pile de logiciels réseau d'un terminal du premier réseau.

6. Serveur (16) pour système de télécommunication par satellite (20) permettant la transmission et la réception de messages multi-destinations, comportant des moyens pour transmettre à chacun des émetteurs et récepteurs de messages multi-destinations des éléments de sécurité pour permettre que chacun des émetteurs puisse chiffrer les messages multi-destinations et chacun des récepteurs puisse déchiffrer les messages reçus afin que tous les récepteurs faisant partie d'un groupe puissent recevoir simultanément les messages chiffrés reçus, lesdits messages étant sous forme de paquets IP chifrés en mode tunnel, les éléments de sécurité à transmettre sont compris dans le groupe comportant : des fonctions et clés à utiliser pour protéger des paquets, c'est-à-dire pour chiffrer, déchiffrer et authentifier les paquets, ou pour modifier les paquets, des formats d'encapsulation des paquets IP, des données de filtrage définissant le groupe de récepteurs des paquets, et des données de durées de vie des éléments de sécurité.

7. Serveur selon la revendication 6, **caractérisé en ce que** les messages sont des paquets selon un protocole réseau.

8. Serveur selon la revendication 6 ou 7, **caractérisé en ce qu'**il comporte des moyens de connexion à un réseau pour transmettre de façon confidentielle et sécurisée les éléments de sécurité à chacun des émetteurs et récepteurs de messages selon un mode mono et/ou multidestinations.

9. Serveur selon la revendication 8, **caractérisé en que** des fonctions de sécurité et les modifications apportées aux paquets réseau sont séparées et forment des blocs chaînés.

10. Serveur selon la revendication 9, **caractérisé en ce qu'**il comporte des moyens pour supprimer, ajouter ou remplacer au moins un bloc.

11. Serveur selon la revendication 9 ou 10, **caractérisé en ce que** les blocs chaînés sont compris dans le groupe incluant : le protocole IPSec ESP, le protocole IPSec AH, le chiffrement, l'authentification, le mode tunnel, un protocole TCP spoofer, un protocole IGMP proxy et un protocole Drop.

12. Serveur selon l'une des revendications 6 à 11, **caractérisé en ce que** les moyens de transmission du serveur vers les émetteurs et récepteurs comportent des moyens pour, qu'au cours d'une première phase, le serveur communique par des messages mono-destination avec les émetteurs et récepteurs afin de réaliser une authentification mutuelle et mettre en place un tunnel chiffré.

13. Serveur selon la revendication 12, **caractérisé en ce qu'**il comporte des moyens pour, qu'au cours d'une seconde phase, il puisse envoyer à chaque émetteur et récepteur des messages de configuration en mode mono-destination.

14. Serveur selon la revendication 12 ou 13, **caractérisé en ce qu'**il comporte des moyens pour, qu'au cours d'une autre phase, il puisse envoyer des messages de configuration de type multidestinations à plusieurs émetteurs et récepteurs.

15. Serveur selon l'une des revendications 6 à 14, **caractérisé en ce qu'**il comprend des moyens pour fiabiliser l'envoi des éléments de sécurité vers chacun des émetteurs et récepteurs de messages multi-destinations ou monodestinations.

16. Serveur selon la revendication 15, **caractérisé en ce que** les moyens de fiabilisation comprennent un moyen pour retransmettre un message non acquitté par son destinataire après un temps prédéterminé.

17. Serveur selon la revendication 16, **caractérisé en ce que** les éléments de sécurité étant envoyés vers chacun des émetteurs/récepteurs par un message multidestinations, à chaque émetteur/récepteur destinataire est associé une durée prédéterminée d'acquittement qui diffère d'un destinataire à un autre afin que le serveur ne reçoive pas simultanément plusieurs signaux de non acquittement.

18. Serveur selon la revendication 15, 16 ou 17, **caractérisé en ce que** les moyens de fiabilisation comportent un moyen pour associer à chaque message un numéro de séquence.

19. Serveur selon la revendication 18, **caractérisé en ce que** les moyens de fiabilisation comprennent un moyen pour recevoir des messages d'acquittement comportant les numéros de séquence des messages émis correspondants et pour renvoyer les messages correspondant aux numéros de séquence non acquittés.

20. Serveur selon la revendication 18, **caractérisé en ce que** les moyens de fiabilisation comportent, pour les messages multidestinations, un moyen pour détecter des acquittements négatifs provenant d'émetteurs/récepteurs indiquant que ces derniers n'ont pas reçu de messages pour un numéro de séquence donné et des moyens pour retransmettre les messages correspondant aux acquittements négatifs.

21. Système de télécommunication comprenant une pluralité de terminaux (12, 14, 18) reliés les uns aux autres par un réseau à diffusion par satellite, et répartis selon des groupes tels qu'à l'intérieur de chaque groupe chaque terminal puisse émettre des messages multidestinations vers les autres membres du groupe, **caractérisé en ce qu'**à chaque terminal d'un groupe est associé un dispositif de chiffrement et déchiffrement (12₁, 14₁, 18₁) selon l'une des revendications 1 à 5 de façon que chacun de ces terminaux puisse émettre des messages multidestinations déchiffrables uniquement par les autres terminaux du groupe, et **en ce que** le système comporte un serveur central (16₁) selon l'une des revendications 6 à 20 pour distribuer à chacun des dispositifs de chiffrement et de déchiffrement des clés pour une transmission sécurisée des messages multidestinations à l'intérieur de chaque groupe.

22. Système selon la revendication 21, **caractérisé en ce que** les messages transmis sont selon un protocole réseau.

23. Système selon la revendication 22, **caractérisé en ce que** le protocole réseau est compris dans le groupe comprenant les protocoles IP, ATM, MPLS, Ethernet, PEP, PPPoE.

24. Système selon l'une des revendications 21 à 23, **caractérisé en ce que** les terminaux sont reliés à un réseau terrestre filaire et fournissent des messages déchiffrés à ce réseau filaire.

25. Système selon l'une des revendications 21 à 24, **caractérisé en ce que** les terminaux sont aptes à fournir des messages chiffrés au réseau à diffusion.

26. Système selon la revendication 25, **caractérisé en ce que** le serveur central est relié aux terminaux par l'intermédiaire du réseau à diffusion.

## Claims

1. An encryption (34) and decryption (40) device including a first interface for receiving and sending encrypted messages via a first network that consists of a satellite telecommunication network (20), a second interface connected to a second network that consists of a cable network (24) to receive from said second network messages to be encrypted and transmitted by the first network and to deliver to the second network decrypted messages from the first network, and a third interface for receiving encryption and decryption keys from a server (16), the encryption keys being used to encrypt a multidestination message to selected addressees forming part of the same group as a terminal with which the device is associated, said device including means for sending said messages in the form of encrypted IP packets in tunnel mode, means for sending and receiving second headers with security data from the group comprising: identification data enabling the device to determine the functions and keys to be used to return each packet to its original form and to verify its integrity and its source, data relating to the segmentation of the packets, data relating to the service life of the session keys, and a packet number.

2. A device according to claim 1, **characterised in that** the control plane and the data plane of the device are separate.

3. A device according to claim 2, **characterised in that** it includes means for transmitting encrypted IP packets with a first header relating to routing and addressing and a second header relating to the security data of the packet.

4. A device according to any of claims 1 to 3, **characterised in that** its interface for the connection to the first network is connected directly to an interface of a terminal of the network.

5. A device according to any of claims 1 to 4, **characterised in that** it takes the form of software integrated into the network software stack of a terminal of the first network.

6. A server (16) for a satellite (20) telecommunication system for transmitting and receiving multidestination messages, which server includes means for transmitting security elements to each multidestination message sender and receiver such that each sender can encrypt the multidestination messages and each receiver can decrypt the messages received so that all the receivers in a group can receive the received encrypted messages simultaneously, said messages being in the form of encrypted IP packets in tunnel mode, the security elements to be transmitted are from the group comprising: functions and keys to be used to protect packets, i.e. to encrypt, decrypt and authenticate packets, or to modify packets, packet encapsulation formats, for IP formats, filter data defining the packet destination group, and data relating to the service life of the security elements.

7. A server according to claim 6, **characterised in that** the messages are network protocol packets.

8. A server according to claim 6 or claim 7, **characterised in that** it includes means for connection to a network for secure confidential transmission of the security elements to each message sender and receiver in a single-destination and/or multidestination mode.

9. A server according to claim 8, **characterised in that** the security functions and the modifications made to the network packets are separate and form strung units.

10. A server according to claim 9, **characterised in that** it includes means for eliminating, adding or replacing at least one unit.

11. A server according to claim 9 or claim 10, **characterised in that** the strung units are from the group comprising: the ESP IPSec protocol, the AH IPSec protocol, encryption, authentication, tunnel mode, a spoofer TCP protocol, a proxy IGMP protocol, and a Drop protocol.

12. A server according to any of claims 6 to 11, **characterised in that** the transmission means from the server to the senders and receivers include means such that, during a first phase, the server communicates with the senders and receivers by means of single-destination messages for the purposes of mutual authentication and setting up an encrypted tunnel.

13. A server according to claim 12, **characterised in that** it includes means such that during a second phase it can send each sender and receiver configuration messages in single-destination mode.

14. A server according to claim 12 or claim 13, **characterised in that** it includes means for sending multidestination configuration messages to a plurality of senders and receivers during another phase.

15. A server according to any of claims 6 to 14, **characterised in that** it includes means for making the sending of security elements to each sender and receiver of multidestination or single-destination messages reliable.

16. A server according to claim 15, **characterised in that** the means for making the sending of security elements to each sender and receiver of multidestination or single-destination messages reliable include means for transmitting again a message not acknowledged by its addressee after a predetermined time.

17. A server according to claim 16, **characterised in that** the security elements are sent to each sender/receiver by means of a multidestination message and each destination sender/receiver is associated with a predetermined acknowledgement time, which differs from one addressee to another, so that the server does not receive a plurality of negative acknowledgement signals simultaneously.

18. A server according to claim 15, claim 16 or claim 17, **characterised in that** the means for making the sending of security elements to each sender and receiver of multidestination or single-destination messages reliable include means for associating a sequence number with each message.

19. A server according to claim 18, **characterised in that** the means for making the sending of security elements to each sender and receiver of multidestination or single-destination messages reliable include means for receiving acknowledgement messages including the sequence numbers of corresponding sent messages and for sending again messages corresponding to sequence numbers that have not been acknowledged.

20. A server according to claim 18, **characterised in that** the means for making the sending of security elements to each sender and receiver of multidestination or single-destination messages reliable include, for multidestination messages, means for detecting negative acknowledgements from senders/receivers indicating that they have not received messages for a given sequence number and means for transmitting again messages corresponding to the negative acknowledgements.

21. A telecommunication system including a plurality of terminals (12, 14, 18) connected to one another by a satellite broadcast network, and divided into groups such that within each group each terminal can send multidestination messages to the other members of the group, which system is **characterised in that** each terminal of a group is associated with encryption and decryption means (12₁, 14₁, 18₁) so that each of said terminals can send multidestination messages that can be decrypted only by the other terminals of the group, and **in that** the system includes a central server (16₁) according to any of claims 6 to 20 for distributing to each encryption and decryption device keys for secure transmission of multidestination messages within each group.

22. A system according to claim 21, **characterised in that** the messages transmitted are transmitted in accordance with a network protocol.

23. A system according to claim 22, **characterised in that** the network protocol is chosen from the group comprising the following protocols: IP, ATM, MPLS, Ethernet, PEP, PPPoE.

24. A system according to any of claims 21 to 23, **characterised in that** the terminals are connected to a terrestrial cable network and supply the decrypted messages to said cable network.

25. A system according to any of claims 21 to 24, **characterised in that** the terminals are adapted to supply encrypted messages to the broadcast network.

26. A system according to claim 25, **characterised in that** the central server is connected to the terminals by the broadcast network.

## Patentansprüche

1. Vorrichtung zur Verschlüsselung (34) und Entschlüsselung (40), umfassend eine erste Schnittstelle, um über ein erstes von einem Satelliten (20) gestütztes Telekommunikationsnetz verschlüsselte Nachrichten zu empfangen und zu senden, eine zweite Schnittstelle, die mit einem zweiten drahtgebundenen Netz (24) verbunden ist, um aus diesem zweiten Netz zu verschlüsselnde Nachrichten zu empfangen, die über das erste Netz zu übertragen sind, und um über dieses zweite Netz entschlüsselte und aus dem ersten Netz kommende Nachrichten zuzustellen, und eine dritte Schnittstelle, um von einem Server (16) Schlüssel zum Verschlüsseln und Entschlüsseln zu empfangen, wobei die Verschlüsselungsschlüssel ermöglichen, eine Nachricht für Mehrfachziele zu ausgewählten Zielen zu verschlüsseln, die zu derselben Gruppe wie ein Endgerät gehören, dem die Vorrichtung zugeordnet ist, wobei die Vorrichtung Mittel umfasst, um die Nachrichten in Form von verschlüsselten IP-Paketen im Tunnelmodus zu senden, ein Mittel, um zweite Header mit Sicherheitsdaten zu senden und zu empfangen, die in der Gruppe enthalten sind, umfassend: Kennungsdaten, welche der Vorrichtung ermöglichen, die Funktionen und Schlüssel zu bestimmen, die zu verwenden sind, um jedem Paket wieder seine ursprüngliche Form zu geben und seine Integrität und seine Herkunft zu überprüfen, Daten zur Segmentierung der Pakete, Daten zur Lebensdauer der Sitzungsschlüssel und eine Paketnummer.

2. Vorrichtung nach Anspruch 1, **dadurch gekennzeichnet, dass** die Steuerebene und die Datenebene der Vorrichtung getrennt sind.

3. Vorrichtung nach Anspruch 2, **dadurch gekennzeichnet, dass** sie ein Mittel umfasst, um die verschlüsselten IP-Pakete mit einem ersten Leitweglenkungs- und Adressen-Header und mit einem zweiten Header, der die Sicherheitsdaten dieses Pakets betrifft, zu übertragen.

4. Vorrichtung nach einem der Ansprüche 1 bis 3, **dadurch gekennzeichnet, dass** ihre Schnittstelle für die Verbindung zum ersten Netz direkt an eine Schnittstelle eines Endgerätes dieses Netzes angeschlossen ist.

5. Vorrichtung nach einem der Ansprüche 1 bis 4, **dadurch gekennzeichnet, dass** sie in Form einer Software ausgeführt ist, die in den Netzsoftware-Kellerspeicher eines Endgerätes des ersten Netzes integriert ist.

6. Server (16) für ein von einem Satelliten (20) gestütztes Telekommunikationssystem zur Ermöglichung der Übertragung und des Empfangs von Nachrichten für Mehrfachziele, umfassend Mittel, um an jeden der Sender und Empfänger von Nachrichten für Mehrfachziele. Sicherheitselemente zu übertragen, um zu ermöglichen, dass jeder der Sender die Nachrichten für Mehrfachziele verschlüsseln kann und jeder der Empfänger die empfangenen Nachrichten entschlüsseln kann, damit alle Empfänger, die zu einer Gruppe gehören, gleichzeitig die empfangenen verschlüsselten Nachrichten empfangen können, wobei die Nachrichten in Form von verschlüsselten IP-Paketen im Tunnelmodus vorliegen und die zu übertragenden Sicherheitselemente in der Gruppe enthalten sind, welche umfasst: Funktionen und Schlüssel, die zum Schützen der Pakete zu verwenden sind, das heißt, zum Verschlüsseln, Entschlüsseln und Authentifizieren der Pakete oder zum Verändern der Pakete, Kapselungsformate der IP-Pakete, Filterungsdaten, welche die Empfängergruppe der Pakete definieren, und Daten zur Lebensdauer der Sicherheitselemente.

7. Server nach Anspruch 6, **dadurch gekennzeichnet, dass** die Nachrichten Pakete gemäß einem Netzprotokoll sind.

8. Server nach Anspruch 6 oder 7, **dadurch gekennzeichnet, dass** er Verbindungsmittel zu einem Netz umfasst, um die Sicherheitselemente vertraulich und sicher an jeden der Sender und Empfänger von Nachrichten in einem Einfachziel- und/oder Mehrfachziel-Modus zu übertragen.

9. Server nach Anspruch 8, **dadurch gekennzeichnet, dass** die Sicherheitsfunktionen und die an den Netzpaketen vorgenommenen Änderungen getrennt sind und verkettete Blöcke bilden.

10. Server nach Anspruch 9, **dadurch gekennzeichnet, dass** er Mittel umfasst, um einen Block wegzulassen, hinzuzufügen oder mindestens einen Block zu ersetzen.

11. Server nach Anspruch 9 oder 10, **dadurch gekennzeichnet, dass** die verketteten Blöcke in der Gruppe enthalten sind, welche umfasst: das Protokoll IPSec ESP, das Protokoll IPSec AH, die Verschlüsselung, die Authentifizierung, den Tunnelmodus, ein Protokoll TCP Spoofer, ein Protokoll IGMP Proxy und ein Protokoll Drop.

12. Server nach einem der Ansprüche 6 bis 11, **dadurch gekennzeichnet, dass** die Übertragungsmittel des Servers zu den Sendern und Empfängern Mittel umfas-, sen, damit der Server im Verlauf einer ersten Phase über Nachrichten mit Einfachziel mit den Sendern und Empfängern kommuniziert, um eine gegenseitige Authentifizierung durchzuführen und einen verschlüsselten Tunnel einzurichten.

13. Server nach Anspruch 12, **dadurch gekennzeichnet, dass** er Mittel umfasst, damit er im Verlauf einer zweiten Phase an jeden der Sender und Empfänger Konfigurationsnachrichten im Einfachziel-Modus senden kann.

14. Server nach Anspruch 12 oder 13, **dadurch gekennzeichnet, dass** er Mittel umfasst, damit er im Verlauf einer anderen Phase Konfigurationsnachrichten des Mehrfachziel-Typs an mehrere Sender und Empfänger senden kann.

15. Server nach einem der Ansprüche 6 bis 14, **dadurch gekennzeichnet, dass** er Mittel umfasst, um die Zuverlässigkeit des Sendens der Sicherheitselemente zu jedem der Sender und Empfänger von Nachrichten mit Mehrfachziel oder Einfachziel zu gewährleisten.

16. Server nach Anspruch 15, **dadurch gekennzeichnet, dass** die Mittel zur Gewährleistung der Zuverlässigkeit ein Mittel umfassen, um eine von ihrem Empfänger nach einer zuvor festgelegen Zeit nicht bestätigte Nachricht erneut zu übertragen.

17. Server nach Anspruch 16, **dadurch gekennzeichnet, dass** bei den Sicherheitselementen, die zu jedem der Sender/Empfänger durch eine Nachricht mit Mehrfachziel gesendet werden, jedem Ziel-Sender/Empfänger eine zuvor festgelegte Bestätigungsdauer zugeordnet ist, die sich von einem Empfänger zum anderen unterscheidet, damit der Server nicht gleichzeitig mehrere Bestätigungssignale empfängt.

18. Server nach Anspruch 15, 16 oder 17, **dadurch gekennzeichnet, dass** die Mittel zur Gewährleistung der Zuverlässigkeit ein Mittel umfassen, um jeder Nachricht eine Folgenummer zuzuweisen.

19. Server nach Anspruch 18, **dadurch gekennzeichnet, dass** die Mittel zur Gewährleistung der Zuverlässigkeit ein Mittel umfassen, um Bestätigungsnachrichten zu empfangen, welche die Folgenummern der entsprechenden Nachrichten umfassen, und um die Nachrichten, welche nicht bestätigten Folgenummern entsprechen, erneut zu senden.

20. Server nach Anspruch 18, **dadurch gekennzeichnet, dass** die Mittel zur Gewährleistung der Zuverlässigkeit für Nachrichten mit Mehrfachziel ein Mittel umfassen, um Negativbestätigungen von Sendern/Empfängern zu erkennen, die angeben, dass letztere Nachrichten für eine bestimmte Folgenummer nicht erhalten haben, sowie Mittel, um die den Negativbestätigungen entsprechenden Nachrichten erneut zu übertragen.

21. Telekommunikationssystem, umfassend eine Vielzahl von Endgeräten (12, 14, 18), die untereinander über ein satellitengestütztes Sendenetz verbunden sind und die so auf Gruppen aufgeteilt sind, dass innerhalb jeder Gruppe jedes Endgerät Nachrichten mit Mehrfachziel zu den anderen Mitgliedern der Gruppe senden kann, **dadurch gekennzeichnet, dass** jedem Endgerät einer Gruppe eine Verschlüsselungs- und Entschlüsselungsvorrichtung (12₁, 14₁, 18₁) nach einem der Ansprüche 1 bis 5 in der Weise zugeordnet ist, dass jedes dieser Endgeräte Nachrichten mit Mehrfachziel senden kann, die ausschließlich von den anderen Endgeräten der Gruppe entschlüsselt werden können, sowie **dadurch**, dass das System einen zentralen Server (16₁) nach einem der Ansprüche 6 bis 20 umfasst, um an jede der Verschlüsselungs- und Entschlüsselungsvorrichtungen Schüssel für eine sichere Übertragung der Nachrichten mit Mehrfachziel im Innern jeder Gruppe zu verteilen.

22. System nach Anspruch 21, **dadurch gekennzeichnet, dass** die übertragenen Nachrichten einem Netzprotokoll entsprechen.

23. System nach Anspruch 22, **dadurch gekennzeichnet, dass** das Netzprotokoll in der Gruppe enthalten ist, welche die Protokolle IP, ATM, MPLS, Ethernet, PEP, PPoE umfasst.

24. System nach einem der Ansprüche 21 bis 23, **dadurch gekennzeichnet, dass** die Endgeräte mit einem drahtgebundenen terrestrischen Netz verbunden sind und entschlüsselte Nachrichten an dieses drahtgebundene Netz liefern.

25. System nach einem der Ansprüche 21 bis 24, **dadurch gekennzeichnet, dass** die Endgeräte dafür geeignet sind, verschlüsselte Nachrichten an das Sendenetz zu liefern.

26. System nach Anspruch 25, **dadurch gekennzeichnet, dass** der zentrale Server mit den Endgeräten über das Sendenetz verbunden ist.
